Europäisches Patentamt

European Patent Office

Office européen des brevets

(11) Publication number: **0 323 386**
**A1**

(12) **EUROPEAN PATENT APPLICATION**

(21) Application number: **88500130.5**

(22) Date of filing: **29.12.88**

(51) Int. Cl.4: **G 09 F 13/18**

(30) Priority: **30.12.87 ES 8704084**

(43) Date of publication of application:
**05.07.89 Bulletin 89/27**

(84) Designated Contracting States:
**AT BE CH DE FR GB GR IT LI NL SE**

(71) Applicant: **Lopez Artiga, Ricardo**
**Embajadores 106-108**
**E-28012 Madrid (ES)**

(72) Inventor: **Lopez Artiga, Ricardo**
**Embajadores 106-108**
**E-28012 Madrid (ES)**

(74) Representative: **Plaza Fernandez-Villa, Luis**
**Gran Via 57-5-A**
**E-28013 Madrid (ES)**

(54) **Improved publicitary device.**

(57) Improved publicitary device. It is an improved publicitary device which allows to reflect the motif by transparency and which is provided with a light source assembled at the bottom and placed inside a receptacle. The trasparent support is made in optical fibre through which the light is uniformly absorbed throughout all its points, the support faces may be either plain or matte. A higher luminosity of the publicitary motiv is obtained with less light sources.

FIG.2

**Description**

# IMPROVED PUBLICITARY DEVICE

This utility model refers to an improved publicitary device, which provides a new performance way on any kind of device devoted to the same purpose being presently known.

It more particularly refers to publicitary devices allowing to reflect one subject through transparencuy and which are fitted with a light source, the latter being also used, among a large number of applications, in transparency and illumination tables. The above-mentioned does not mean, of course, any limitation as to its use, since it will obviusly be used for any alternative application.

The devices of this nature presently known are constituted by a frame within which the light source is located, further on attaching to it the publicitary motif followed by an outer glass.

These devices suffer several drawbacks. The main one is that they must have available a strong illumination source in order to make light reach every point thus duly lighting the model.

There are, as well, several illumination sources which, besides being rather expensive, have the serious drawback that the luminous focus is seen through the glass, thus jeopardizing the assembly.

With the device shown in this utility model the above incoveniences are surpassed since it is obtained a strong and constant illumination of the whole assembly with a minimum light source which acquires progressive intensity as it remains lit, until it reaches its summit.

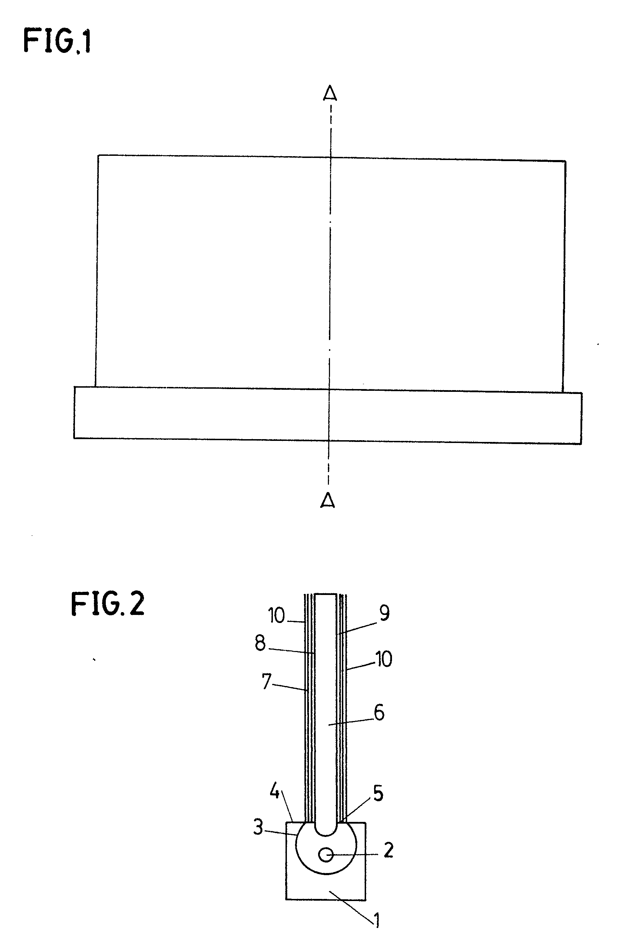

The attached drawing sheet shows, Figure 1, a side view of a device and, Figure 2, a cross section of an example of performance of the device, as a preferential one, this not meaning any limitation whatsoever.

It may noted, in the said drawing, that it is fitted with a basis 1 which acts as basis for the assembly and also as placing support.

This basis 1 is hollow and has, in its inside, the necessary elements for the coupling and working of a light source 2 which, should the case arise, might be more than one and, of course, of any nature.

Surrounding this light source 2, within the basis 1, is placed a reflecting screen 3 in such a way that their edges coincide with the upper face 4 of basis 1. In this upper face 4 has been opened a longitudinal slit 5, which serves as the basis for introducing therein the support 6 which will allow to assemble the publicitary motif 7 upon it.

Support 6 presents the novelty that it has been constituted by an optical fibre. Due to this reason and also because of the properties thereof, the illumination flowing from the light source 2 is being progressively absorbed by the optical fibre in higher proportion until it reaches its maximum level being, besides, of uniform tonality throughout all its points.

A further novelty lies in the fact that both faces, 8 and 9, of support 6 are matte, which contributes to give prominence to the publicitary motifs.

In order to protect them from extrenal agents, upon every publicitary motif is placed a glass 10.

The placing of suuport 6, as well as that of the publicitary motifs, protecting glass, etc., will be adequated to the various necessities existing in this field, either due to the location of the device or to its size, etc., which, of course, by no means alters its novelty.

**Claims**

1.- Improved publicitary device, characterized by the fact that it is constituted by a hollow support, within which is placed an illumination source which is surrounded by a reflecting screen except for the part corresponding to the support's upper side, where has been opened a slit, preferentially longitudinal rectangular, through which the internal light will be projected to the outside, having disposed in this slit an optical fibre support which receives the light this being uniformally absorbed thereby.

2.- Device according with Claim 1, characterized by the fact that both faces of the optical fibre support are matte.

3. Device, according with above Claims, characterized by the fact that on both faces of the support are assembled publicitary motifs and, upon the latter, a glass.

# FIG.1

# FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 346 795  (REGIE AUTONOME DES TRANSPORTS PARISIENS) <br> * Page 2, line 19 - page 4, line 30; figures 1-4 * | 1-3 | G 09 F  13/18 |
| X | EP-A-0 187 410  (GLOBETECH LTD) <br> * Page 9, line 7 - page 10, line 33; figures 1,2 * | 1-3 | |
| X | FR-A-2 544 528  (Y. LECLOUX) <br> * Page 3, line 34 - page 5, line 16; figures 1-7 * | 1-3 | |
| X | FR-A-2 110 848  (A. GONTIER ARRIVAT) <br> * Page 2, lines 26-32; figure 1 * | 1-3 | |

TECHNICAL FIELDS SEARCHED (Int. Cl.4)

G 09 F

The present search report has been drawn up for all claims

| Place of search | Date of completion of the search | Examiner |
|---|---|---|
| THE HAGUE | 22-03-1989 | GALLO G.G. |

EPO FORM 1503 03.82 (P0401)